(19)

**Europäisches Patentamt**
**European Patent Office**
**Office européen des brevets**

(11) **EP 2 173 056 A1**

(12) **DEMANDE DE BREVET EUROPEEN**

(43) Date de publication:
**07.04.2010 Bulletin 2010/14**

(51) Int Cl.:
***H04L 9/06*** (2006.01)

(21) Numéro de dépôt: **08305521.0**

(22) Date de dépôt: **04.09.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(71) Demandeur: **Gemplus**
**13420 Gemenos (FR)**

(72) Inventeur: **Coron, Jean-Sebastien**
**92197 Meudon Cedex (FR)**

(54) **Procédé de contre-mesure dans un composant électronique mettant en ouvre un algorithme de cryptographie à clef secrète**

(57) L'invention se rapporte à une méthode de sécurisation d'un algorithme cryptographique. L'algorithme transforme un message d'entrée en message de sortie. La méthode modifie l'implémentation de l'algorithme sans que cela ne change le message de sortie. La méthode comprend l'ajout d'une permutation P sur le message d'entrée, la permutation inverse $P^{-1}$ étant appliquée à l'issue de l'exécution de l'algorithme afin d'obtenir le message de sortie, les opérations internes de l'algorithme étant modifiées de manière à manipuler les données intermédiaires sous forme permutée.

**Description**

L'invention concerne un procédé de contre-mesure dans un dispositif électronique mettant en oeuvre un algorithme de cryptographie à clé secrète. De tels dispositifs sont typiquement utilisés dans des applications où la confidentialité des données ou bien l'accès à certains services sont strictement contrôlés. Ils ont généralement une architecture formée autour d'un microprocesseur et de mémoires, dont une mémoire programme qui contient une clé secrète. De tels dispositifs comprennent notamment les composants utilisés dans les cartes à puce, pour permettre des applications telles que l'accès à certaines bases de données, le télé-péage ou bien l'accès à des données bancaires.

Ces dispositifs mettent généralement en oeuvre un algorithme de cryptographie à clé secrète, dont l'un des plus utilisés est l'algorithme AES (pour Advanced Encryption Standard). D'autres algorithmes à clé secrète existent, comme l'algorithme DES ou encore l'algorithme Blowfish; cette liste n'est bien sûr pas exhaustive. Ces algorithmes ont généralement pour fonction de calculer un message chiffré à partir d'un message donné en entrée du composant et de la clé secrète contenue dans le composant, et de fournir en retour ce message chiffré, ou réciproquement de déchiffrer un message chiffré. Cela permet par exemple à un système d'authentifier le composant ou la carte à puce, ou bien d'échanger des données de manière confidentielle.

Le fonctionnement de l'algorithme AES est exposé ci-dessous. Pour une description plus détaillée de l'algorithme AES, on peut se reporter au livre « The Design of Rijndael: AES -The Advanced Encryption Standard », J. Daemen and V. Rijmen, Springer-Verlag, 2002. ISBN 35400425802.

Le chiffrement AES prend en entrée un message de 16 octets soit 128 bits, et utilise une clef de taille 128 bits. L'algorithme de chiffrement AES comprend un certains nombres d'opérations qui s'effectuent sur un ensemble de 16 octets appelé l'état. Ces opérations sont les suivantes:

- Opération « AddRoundKey »: chacun des 16 octets de l'état est combiné avec un octet d'une sous-clef au moyen d'une opération de type OU exclusif, en effectuant l'opération suivante: $s_{i,j} \leftarrow s_{i,j} \text{ XOR } k_{i,j}$

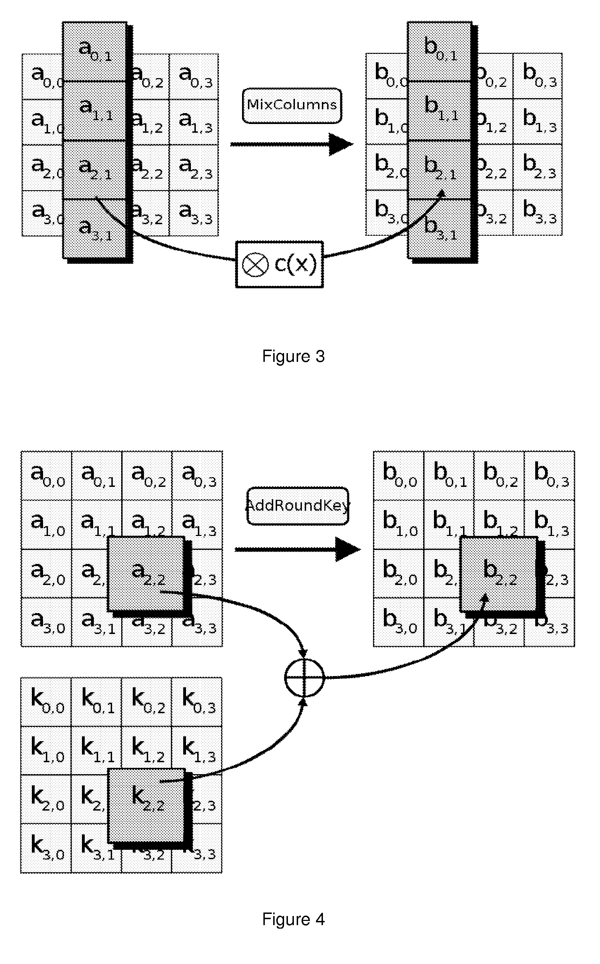

où $s_{i,j}$ sont les octets de l'état et $k_{i,j}$ sont les octets de la sous-clef dérivée à partir de la clé principale. L'opération AddRoundKey est illustrée au moyen de la Figure 4.

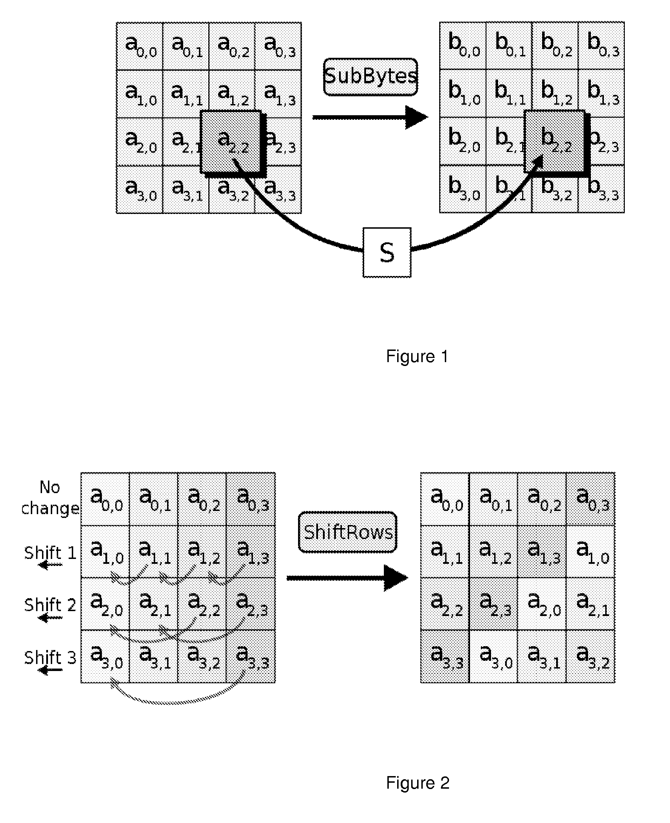

- Opération « SubBytes »: on applique à chacun des 16 octets de l'état une permutation fixe et déterminée à l'avance notée S, au moyen de l'opération suivante: $s_{i,j} \leftarrow S(s_{i,j})$
  L'opération SubByte est illustrée au moyen de la Figure 1.
- Opération « ShiftRows »: l'opération consiste à permuter entre eux certains des 16 octets, selon un modèle fixé à l'avance.
  L'opération ShiftRows est illustrée au moyen de la Figure 2.
- Opération « MixColumns »: l'opération consiste à combiner entre eux au moyen d'opérations linéaires les octets de l'état, à l'aide des opérations suivantes:

$$s'_{0,c} \leftarrow (02 \cdot s_{0,c}) \text{ XOR } (03 \cdot s_{1,c}) \text{ XOR } s_{2,c} \text{ XOR } s_{3,c}$$

$$s'_{1,c} \leftarrow s_{0,c} \text{ XOR } (02 \cdot s_{1,c}) \text{ XOR } (03 \cdot s_{2,c}) \text{ XOR } s_{3,c}$$

$$s'_{2,c} \leftarrow s_{0,c} \text{ XOR } s_{1,c} \text{ XOR } (02 \cdot s_{2,c}) \text{ XOR } (03 \cdot s_{3,c})$$

$$s'_{3,c} \leftarrow (03 \cdot s_{0,c}) \text{ XOR } s_{1,c} \text{ XOR } s_{2,c} \text{ XOR } (02 \cdot s_{3,c})$$

L'opération MixColumns est illustrée au moyen de la Figure 3.

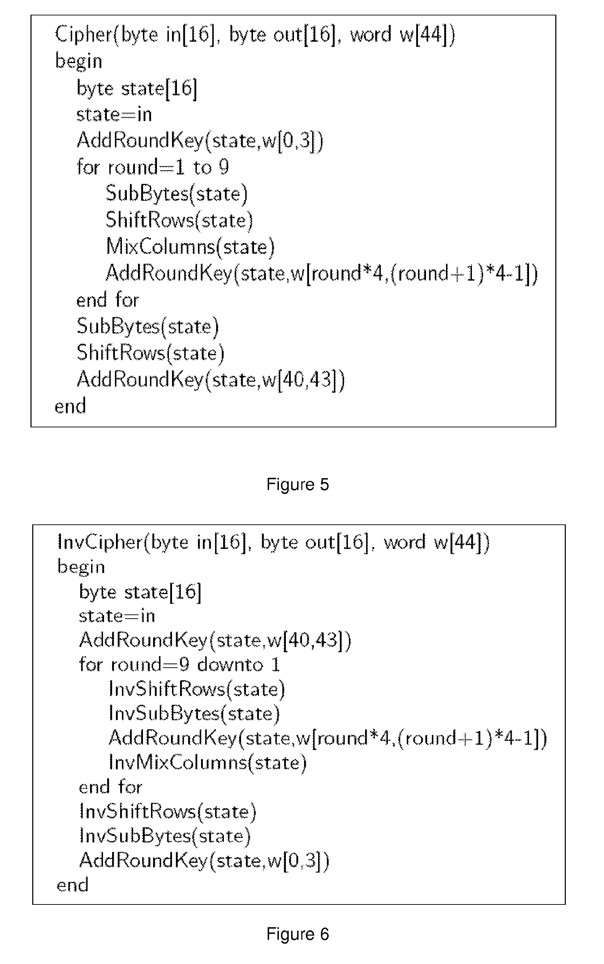

L'exécution complète de l'algorithme de chiffrement AES est illustrée au moyen de la Figure 5.
L'opération de déchiffrement de l'algorithme à clef secrète AES comprend les opérations suivantes:

- Opération « InvShifRows »: la permutation inverse des octets de l'état est appliquée.
- Opération « InvSubBytes »: on applique à chacun des 16 octets de l'état la permutation inverse $S^{-1}(X)$, à l'aide de l'opération suivante: $s_{i,j} \leftarrow S^{-1}(s_{i,j})$
- Opération InvMixColumns: on applique la transformation linéaire suivante:

$$s'_{0,c} \leftarrow (0e \cdot s_{0,c}) \text{ XOR } (0b \cdot s_{1,c}) \text{ XOR } (0d \cdot s_{2,c}) \text{ XOR } (09 \cdot s_{3,c})$$

$$s'_{1,c} \leftarrow (09 \cdot s_{0,c}) \text{ XOR } (0e \cdot s_{1,c}) \text{ XOR } (0b \cdot s_{2,c}) \text{ XOR } (0d \cdot s_{3,c})$$

$$s'_{2,c} \leftarrow (0d \cdot s_{0,c}) \text{ XOR } (09 \cdot s_{1,c}) \text{ XOR } (0e \cdot s_{2,c}) \text{ XOR } (0b \cdot s_{3,c})$$

$$s'_{3,c} \leftarrow (0b \cdot s_{0,c}) \text{ XOR } (0d \cdot s_{1,c}) \text{ XOR } (09 \cdot s_{2,c}) \text{ XOR } (0e \cdot s_{3,c})$$

L'exécution complète de l'algorithme de déchiffrement AES est illustrée au moyen de la Figure 6.

Enfin, le calcul des sous-clefs de l'algorithme de chiffrement AES comprend les opérations suivantes:

- Opération « SubWord »: cette opération applique la permutation S sur chacun des 4 octets de l'entrée.

- Opération « RotWord »: cette opération effectue une permutation cyclique des 4 octets de l'entrée.

- Opération « Xor with Rcon »: cette opération effectue une opération de OU exclusif sur le premier des 4 octets de l'entrée, le deuxième opérande étant une constante issue du tableau constant Rcon.

Le pseudo code d'une implémentation naïve (non optimisée et non sécurisée) de l'étape de calcul des sous-clés (traditionnellement dénommée « key expansion ») est donné ci-dessous à titre d'information, pour une description plus détaillée on peut se reporter à la référence mentionnée précédemment: « The Design of Rijndael: AES -The Advanced Encryption Standard ». Il prend en entrée une clé (key) de 16 octets (soit 4 words) et produit und réponse (w) de 44 words (soit 176 octets).

```
KeyExpansion(byte key[16], word w[44]){
Word temp;
For(i=0;i<4;i++)
        w[i]=(key[4*i], key[4*i+1], key[4*i+2], key[4*i+3]);
For(i=4;i<44;i++){
        Temp=w[i-1];
        If (I mod 4 = 0)
                temp = SubWord(RotWord(temp)) XOR Rcon[i/4];
                // N.B. on a Rcon[i/4]=2^(i/4)
        W[i]=w[i-4] XOR temp;
        }
}
```

Il est apparu que l'implémentation, même sur des dispositifs électroniques très sécurisés tels que des cartes à puce, d'un algorithme de chiffrement à clé secrète était généralement vulnérable à des attaques consistant en une analyse différentielle de la consommation de courant, ladite attaque permettant de retrouver la clé secrète. Ces attaques sont appelées attaques DPA, acronyme de Differential Power Analysis. Le principe de ces attaques DPA repose sur le fait que la consommation en courant du microprocesseur exécutant des instructions varie selon la donnée manipulée. L'idée de base de l'attaque DPA est d'utiliser la différence du profil de consommation en courant d'une instruction selon qu'elle manipule un « 1 » ou un « 0 », ainsi que d'utiliser la possibilité de calculer la valeur d'un ou plusieurs bits appelés bits cibles, à partir d'un message connu en entrée ou en sortie et d'une hypothèse sur une partie de la clé. En appliquant une analyse statistique sur les consommations de courant mesurées, il est alors possible de déterminer laquelle des hypothèses sur chaque partie de la clé est la bonne, et d'obtenir ainsi successivement toutes les parties de la clé secrète.

Un procédé de protection bien connu pour protéger un algorithme à clef secrète contre les attaques de type DPA consiste à masquer toutes les données avec un masque aléatoire, au moyen d'une opération de type OU exclusif. Un tel procédé a été décrit dans la demande de brevet « Procédé de contre-mesure dans un composant électronique mettant en oeuvre un algorithme de cryptographie à clé secrète », référence: EP 1125394, WO0027068. Un tel procédé rend en principe l'attaque DPA inopérante car la consommation de courant en un point donné devient aléatoire et indépendante des données confidentielles calculées.

Un problème technique qui se pose consiste à chercher des alternatives à ce type de contre mesures, qui rende également toute attaque de type DPA plus difficile à mener à bien, et en particulier une contre-mesure ne nécessitant pas l'utilisation ci-dessus décrite d'un masquage basé uniquement sur des opérations de type OU exclusif.

De préférence, la contre-mesure devrait offrir un niveau de performance sensiblement équivalent.

Le problème est résolu par une méthode de sécurisation d'un algorithme cryptographique, l'algorithme transformant un message d'entrée en message de sortie, la méthode modifiant l'implémentation de l'algorithme sans que cela ne change le message de sortie, la méthode comprenant l'ajout d'une permutation P sur le message d'entrée, la permutation inverse $P^{-1}$ étant appliquée à l'issue de l'exécution de l'algorithme afin d'obtenir le message de sortie, les opérations internes de l'algorithme étant modifiées de manière à manipuler les données intermédiaires (de préférence toutes les données intermédiaires sensibles, c'est-à-dire susceptibles de permettre à un attaquant d'obtenir des informations secrètes telles que tout ou partie de la clé utilisée dans une opération de chiffrement) sous forme permutée. Ainsi, de préférence, tout au long de l'exécution de l'algorithme cryptographique, tous les octets sensibles manipulés à l'intérieur du composant sont manipulés sous cette forme permutée. A la fin, la représentation d'origine est obtenue en impliquant la permutation inverse de P, ce qui permet d'obtenir le message chiffré (respectivement déchiffré). Ce message chiffré (ou déchiffré) peut alors être renvoyé à l'extérieur. Une analyse des rayonnements émis par un composant exécutant la méthode, ou des fluctuations de sa tension d'alimentation, ou des fluctuations de la consommation de courant, ou d'autres types d'analyses de ce type employées par un attaquant, ne révèlerait au mieux que des données permutées, a priori inexploitables.

La permutation P est de préférence générée à chaque invocation de l'algorithme cryptographique (de manière à être différente lors d'appels successifs à l'algorithme cryptographique), qu'il s'agisse d'une invocation afin de chiffrer un message ou d'une invocation afin de déchiffrer un message. De cette manière, de nombreuses attaques, qui nécessitent un grand nombre de mesures sur les mêmes données, puis des analyses statistiques, ne sont pas exploitables, car les données changent en permanence, de manière imprévisible pour un éventuel attaquant. Il serait envisageable de générer la permutation P une fois pour toutes (de préférence pour chaque dispositif mettant en oeuvre la méthode, de façon à ce que chaque dispositif dispose d'une permutation P distincte, afin qu'un attaque sur un dispositif ne permette pas de retrouver la permutation P pour tous les dispositifs), et de compter sur son caractère secret pour garantir un certain niveau de sécurité, mais une génération fréquente (voire systématique comme indiqué ci-dessus) est préférable car plus sûre (elle rend infiniment plus complexes les attaques tendant à déterminer cette permutation), bien que ralentissant légèrement les performances. La permutation est de préférence aléatoire (étant entendu qu'il n'existe pas de générateur parfaitement aléatoire, il s'agit donc plus rigoureusement d'une permutation pseudo aléatoire, qualifiée d'aléatoire dans la suite par commodité de langage). La permutation P est de préférence une permutation de 8 bits vers 8 bits.

De cette manière, les opérations effectuées lors de l'exécution de l'algorithme cryptographique ne manipulent que des données aléatoires en sorte qu'il est beaucoup plus compliqué de mettre en oeuvre une attaque de type DPA.

La méthode selon l'invention est particulièrement adaptée pour protéger l'exécution de l'algorithme AES, mais peut en fait s'appliquer à toutes sortes d'algorithmes cryptographiques, en particulier les algorithmes symétriques.

D'autres caractéristiques et avantages de l'invention sont détaillés dans la description suivante faite à titre indicatif et nullement limitatif et en référence aux dessins annexés, dans lesquels:

La Figure 1 décrit l'opération « SubBytes » de l'algorithme de chiffrement à clef secrète AES;
La Figure 2 décrit l'opération ShiftRows de l'algorithme AES;
La Figure 3 décrit l'opération MixColumns de l'algorithme AES;
La Figure 4 décrit l'opération AddRoundKey de l'algorithme AES;
La Figure 5 décrit le fonctionnement global de l'opération de chiffrement de l'algorithme AES;
La Figure 6 décrit le fonctionnement global de l'opération de déchiffrement de l'algorithme AES.

Selon un mode de réalisation préféré, une donnée intermédiaire x = xh | xl manipulée par l'algorithme lorsqu'il n'est pas sécurisé par ladite méthode est remplacée, selon ladite méthode, par une forme permutée P(x) = p2(xh) | p1 (xl), où xh sont les h bits de poids fort de x et xl sont les l bits de poids faible de x, p1 et p2 étant deux permutations indépendantes, respectivement de l bits vers l bits et de h bits vers h bits. L'opérateur | désigne la concaténation. Ainsi, le dispositif mettant en oeuvre la méthode ne manipule plus la donnée intermédiaire x, qui pourrait faire l'objet d'une observation par un attaquant (e.g. par SPA ou DPA), mais seulement une donnée permutée de manière difficilement prévisible par l'attaquant (de préférence de manière aléatoire). De préférence, h=l. En particulier, il est souvent pratique d'utiliser une donnée x d'un octet, divisée en deux quartets (poids fort xh et poids faible xl), p1 et p2 sont alors des permutations de 4 bits vers 4 bits.

Selon un mode de réalisation préféré, la génération des permutations p1 et p2 ci-dessus comprend les étapes suivantes:

a. Détermination d'une permutation fixe s1(0) de h bits vers h bits et d'une permutation fixe s2(0) de l bits vers l bits;
b. Calcul d'une suite de permutations suivant la relation de récurrence s1(i+1)(x)=s1(0)(s1 (i)(x) xor k1i) où chaque valeur k1i est générée aléatoirement parmi les nombres de h bits;
c. Définition de la permutation p1 comme égale à s1(n1), pour un certain entier n1;
d. Calcul d'une suite de permutation suivant la relation de récurrence s2(i+1)(x)=s2(0)(s2(i)(x) xor k2i) où chaque valeur k2i est générée aléatoirement parmi les nombres de l bits;
e. Définition de la permutation p2 comme égale à s2(n2), pour un certain entier n2.

En particulier, si h=l, il est possible d'utiliser pour s1(0) et s2(0) une permutation identique s(0)=S1(0)=s2(0), par exemple pour h=l=4, on peut prendre s(0)=[14,6,0,5,9,1,4,15,8,10,12,2,3,13,11,7]. Cette permutation s(0), ou les permutations s1(0) et s2(0), si elles sont distinctes, peuvent être pré-calculées et enregistrées une fois pour toutes dans le dispositif mettant en oeuvre l'algorithme cryptographique. Il est aussi envisageable de déterminer ces permutations de façon dynamique, par exemple lors de la première utilisation de la méthode (afin de garantir une permutation initiale différente sur chaque dispositif mettant en oeuvre la méthode), voire lors de chaque utilisation de l'algorithme cryptographique. Ceci n'est cependant pas indispensable, dans la mesure où les valeurs aléatoires k1i et k2i (on devrait dire pseudo aléatoires) permettent en tout état de cause d'obtenir des permutations p1 et p2 relativement imprévisibles. Dans un mode de réalisation préféré, on prend n1=n2. En particulier, on peut choisir n1=n2=4. Lorsque s1(0)=s2(0) et n1=n2, seules les valeurs aléatoires k1i et k2i contribuent à différencier p1 de p2. D'autres algorithmes peuvent être utilisés pour générer les permutations p1 et p2. Par exemple pour p1 on peut tirer un nombre aléatoire p1_0 dans l'intervalle $[0..2^l-1]$, puis un nombre aléatoire p1_1 parmi $[0..2^l-1]\backslash\{p1\_0\}$ (le symbole \ signifiant "privé de", c'est-à-dire que l'on retire la valeur p1_0 de l'intervalle $[0..2^l-1]$), puis un nombre aléatoire p1_1 parmi $[0..2^{l-1}]\backslash\{p1\_0,p1\_1\}$, et ainsi de suite jusqu'à p1_2-1, qui est le seul élément de $[0..2^{l-1}]\backslash\{p1\_0,p1\_1, ...p1\_2-2\}$. Ceci peut être réalisé par exemple à partir d'une première liste chaînée initialisée avec des éléments croissants de 0 à $2^l-1$, dont on retire progressivement les éléments au fur et à mesure qu'ils sont tirés aléatoirement par génération d'un nombre aléatoire compris entre 1 et la longueur de la liste, et d'une seconde liste chaînée stockant en première position le premier élément tiré (p1_0), en deuxième position le deuxième élément tiré, et ainsi de suite. La permutation p1 est alors définie grâce à la deuxième liste chaînée comme la permutation qui à i associe p1_i pour tout i dans $[0..2^l-1]$. On peut en faire de même pour p2, dans l'intervalle $[0..2^h-1]$.

Selon un mode de réalisation préféré, l'algorithme cryptographique à protéger étant l'algorithme AES, l'opération "SubBytes" de l'algorithme AES est modifiée de manière à remplacer le calcul de $s_{i,j}$ <- S($s_{i,j}$) par $s'_{ij}$ <- S'($s'_{ij}$), S' étant une permutation définie par S'(x)=P(S(P$^{-1}$(x))) pour tout octet x, et $s'_{ij}$=P($s_{ij}$) représentant les données permutées de l'état $s_{ij}$ à l'aide de la permutation P (qui doit être une permutation de 8 bits vers 8 bits). Ceci est utile en particulier lors du chiffrement par AES. La permutation S' est par exemple stockée sous forme de table. Cette table requiert alors un espace de 256 octets. Cependant, de multiples façon alternatives de calculer le même résultat $s'_{ij}$ <- S'($s'_{ij}$) sont envi-sageables, il importe simplement que l'état $s'_{ij}$ apparaisse toujours sous sa forme permutée (et donc sécurisée) $s'_{ij}$ et jamais sous sa forme sensible $s_{ij}$, ni sous forme trivialement dérivées de la forme sensible (telle que par exemple: cte XOR $s_{ij}$, ou cte est une constante facilement trouvable par un attaquant).

En particulier, à titre d'alternative au recours à une table S' de 256 octets, la méthode peut comprendre une seconde permutation P', sur 8 bits, la permutation P étant décomposée en permutations p1 et p2 comme indiqué ci-dessus, les permutations p1 et p2 étant des permutations sur 4 bits. La permutation P' peut-être générée de manière similaire à la permutation P. Elle peut également se décomposer en permutations p'1 et p'2, analogues de p1 et p2, avec pour une donnée intermédiaire x = xh | xl, P'(x) = p'2(xh) | p'1 (xl), où xh et xl sont les quartets de poids fort et de poids faible de x. Selon ce mode de réalisation, l'opération "SubBytes" de l'algorithme AES est modifiée de manière à mettre en oeuvre le calcul de $s'_{i,j}$ <- S'($s'_{i,j}$) par le calcul de $s'_{ij}$ <- TableLookUp($s'_{ij}$), la fonction TableLookUp, étant définie pour tout octet x par TableLookUp(x)=v|u, avec:

$$u = T(x) \text{ XOR } p2(S2(P^{-1}(P''^{-1}(x))))$$

$$v = T(P'(x)) \text{ XOR } p1(S1(P^{-1}(P'(x))))$$

les fonctions S1 et S2 étant définies pour tout octet x par:

$$S1(x) = \text{quartet de poids faible de } S(x)$$

$$S2(x) = \text{quartet de poids fort de } S(x)$$

la fonction T étant définie pour tout octet x par:

$$T(x) = p1(S1(P^{-1}(x))) \text{ XOR } p2(S2(P^{-1}(P'^{-1}(x))))$$

Cette variante revient en fait à comprimer la table S' précédemment utilisée, pour réduire la quantité de mémoire consommée. La variante est adaptée du procédé utilisé dans l'article « J.R. Rao, P. Rohatgi, H. Scherzer and S. Tinguely, Partitioning attacks: Or How to rapidly Clone Some GSM Cards », Proceedings of the 2002 IEEE Symposium on Security and Privacy, 2002. Le même procédé est aussi décrit dans le brevet: « Space-efficient, side-channel attack resistant table lookups », IBM Corporation, Application Patent 20030044003. Le procédé décrit dans l'article et le brevet précédemment cités permet de comprimer une table aléatoire lorsque la méthode de masquage utilisée est de type OU exclusif. Le procédé de la variante est une adaptation de cette méthode au cas des tables de permutations telles qu'utilisées dans le procédé de l'invention. La variante comprend de préférence deux sous-méthodes (InitTable et TableLookup).

La première, InitTable(P,P'), est composée des deux étapes suivantes:

1. Ecrire S(x) sous la forme S2(x) | S1 (x) pour tout x, où S1(x) et S2(x) sont chacun de taille 4 bits.
2. Générer une table pour la fonction T.

La méthode InitTable prend en entrée les permutations P et P'. InitTable(P,P') est de préférence utilisé à chaque nouvelle exécution de l'algorithme de chiffrement ou de déchiffrement.

La deuxième méthode de cette variante, TableLookUp, consiste en les trois étapes suivantes:

$$u \leftarrow T(x') \text{ XOR } p2(S2(P^{-1}(P'^{-1}(x'))))$$

$$v \leftarrow T(P'(x')) \text{ XOR } p1(S1(P^{-1}(P'(x'))))$$

Renvoyer v | u

Un avantage de cette variante est que le stockage de la table T ainsi que des permutations additionnelles P' et P'$^{-1}$ décomposée en p'1, p'2, p1, p2, ne requiert que 160 octets de mémoire au total, au lieu des 256 octets requis pour la table S'.

Selon un mode de réalisation préféré, l'algorithme cryptographique étant l'algorithme AES, l'opération "Inv-SubBytes" de l'algorithme AES est modifiée de manière à remplacer le calcul de $s_{i,j} \leftarrow S^{-1}(s_{i,j})$ par le calcul de $s'_{ij} \leftarrow S'^{-1}(s'_{ij})$, $S'^{-1}$ étant une permutation définie par $S'^{-1}(x) = P(S^{-1}(P^{-1}(x)))$ pour tout x, et $s'_{ij} = P(s_{ij})$ représentant les données permutées de l'état $s_{ij}$ à l'aide de la permutation P (qui doit être une permutation de 8 bits vers 8 bits). Ceci est utile en particulier lors du déchiffrement par AES. La permutation $S'^{-1}$ est de préférence stockée sous forme de table. Cette table requiert un espace de 256 octets. Cependant, de multiples façon alternatives de calculer le même résultat $s'_{ij} \leftarrow S'^{-1}(s'_{ij})$ sont envisageables, il importe simplement, comme pour SubBytes, que l'état $s'_{ij}$ apparaisse toujours sous sa forme permutée (et donc sécurisée) $s'_{ij}$ et jamais sous sa forme sensible $s_{ij}$, ni sous forme trivialement dérivées de la forme sensible (telle que par exemple: cte XOR $s_{ij}$, ou cte est une constante facilement trouvable par un attaquant).

En particulier, à titre d'alternative au recours à une table $S'^{-1}$ de 256 octets, la méthode peut (de manière analogue à l'alternative décrite ci-dessus pour SubBytes) comprendre une seconde permutation P', sur 8 bits. La permutation P est décomposée en permutations p1 et p2 comme indiqué ci-dessus, les permutations p1 et p2 étant des permutations sur 4 bits. Comme pour le mode de réalisation précédent, la permutation P' peut-être générée de manière similaire à la permutation P. Elle peut également se décomposer en permutations p'1 et p'2, analogues de p1 et p2, avec pour une donnée intermédiaire x = xh | xl, P'(x) = p'2(xh) | p'1(xl), où xh et xl sont les quartets de poids fort et de poids faible de x. Selon ce mode de réalisation, l'opération "InvSubBytes" de l'algorithme AES est modifiée de manière à mettre en oeuvre le calcul de $s_{i,j}$ <- $S^{-1}(s_{i,j})$ en calculant $s'_{ij}$<-TableLookUpInv($s'_{ij}$), la fonction TableLookUpInv, étant définie pour tout octet x par TableLookUpInv(x)=v|u, avec:

$$u = T(x) \text{ XOR } p2(S2(P^{-1}(P'^{-1}(x))))$$

$$v = T(P'(x)) \text{ XOR } p1(S1(P^{-1}(P'(x))))$$

les fonctions S1 et S2 étant définies pour tout octet x par:

$$S1(x) = \text{quartet de poids faible de } S^{-1}(x)$$

$$S2(x) = \text{quartet de poids fort de } S^{-1}(x)$$

la fonction T étant définie pour tout octet x par:

$$T(x)=p1(S1(P^{-1}(x))) \text{ XOR } p2(S2(P^{-1}(P'^{-1}(x))))$$

Selon un mode de réalisation préféré, l'algorithme cryptographique étant l'algorithme AES, l'algorithme AES est modifié de sorte à remplacer le calcul de l'opération "SubWord" sur un quadruplet d'octets (x1,x2,x3,x4), et qui est définie par Subword(x1,x2,x3,x4) = (S(x1),S(x2),S(x3),S(x4)), S étant la Sbox de l'AES, par le calcul d'une opération SubWord' sur le quadruplet d'octets (x'1,x'2,x'3,x'4), avec x'i=P(xi) pour chaque variable xi, l'opération SubWord' étant définie par SubWord'((x'1,x'2,x'3,x'4))=(S'(x'1),S'(x'2),S'(x'3),S'(x'4)), S' étant une permutation définie par S'(x)=P(S(P^{-1}(x))), la permutation P étant une permutation de 8 bits vers 8 bits.

Selon un mode de réalisation préféré améliorant celui qui vient d'être décrit pour la protection de l'opération Subword de l'AES, l'étape « KeyExpansion » de l'AES est modifiée de manière à remplacer, durant chaque itération k, k étant compris entre 1 et 10, et l'octet Rcon(k) étant égal à $2^{k-1}$, le calcul de:

$$temp = \text{SubWord(RotWord(temp)) XOR Rcon(k)}$$

par:

$$temp' = \text{XT8(SubWord'(RotWord(temp')),Rcon'(k))}$$

avec Rcon'(0)=P(Rcon(0)) et Rcon'(k)=D2(Rcon(k-1)) pour un entier k compris entre 2 et 10, la fonction XT8 de 16 bits vers 8 bits pouvant être calculée, pour tout couple d'octets (x,y) se décomposant en x=xh | xl et y=yh | yl, xh et xl étant les quartets de poids fort et de poids faible de x, yh et yl étant les quartets de poids fort et de poids faible de y, par la formule:

$$XT8(x,y)=XT2(xh,yh) \mid XT1(xl,yl)$$

étant entendu qu'il existe d'autres manières de calculer XT8. Les fonctions XT1 et XT2, de 8 bits vers 4 bits, peuvent être calculées, pour tout couple de quartets (x,y), par les formules:

$$XT1(x,y)=p1(p1^{-1}(x) \text{ XOR } p1^{-1}(y))$$

$$XT2(x,y)=p2(p2^{-1}(x) \text{ XOR } p2^{-1}(y))$$

XT1 et XT2 peuvent être calculées d'une autre manière (il suffit d'arriver au même résultat, et, comme expliqué précédemment pour le cas de l'état $s_{ij}$, de ne pas exposer les paramètres sous forme non permutée). La fonction D2 peut être calculée, pour tout octet x=xh|xl, xh étant le quartet de poids fort de x et xl étant le quartet de poids faible, par la formule:

$$D2(xh \mid xl)= XT8(ML(xl),MH(xh))$$

Les fonctions ML et MH peuvent être calculées, pour tout quartet x, par les formules:

$$ML(x)=P(02 \text{ . } (0 \mid p1^{-1}(x)))$$

$$MH(x)=P(02 \text{ . } (p2^{-1}(x) \mid 0)).$$

Dans un mode de réalisation préféré, l'algorithme cryptographique étant l'algorithme AES, l'opération "AddRoundKey" de l'AES est modifiée de manière à remplacer le calcul de $s_{i,j} \leftarrow s_{i,j}$ XOR $K_{i,j}$ par le calcul de $s'_{ij} \leftarrow XT8(s'_{ij}, k'_{ij})$, les valeurs $s'_{ij}=P(s_{ij})$ et $k'_{ij}=P(k_{ij})$ représentant les données permutées de l'état $s_{ij}$, et de la sous-clef $k_{ij}$, à l'aide de la permutation P, qui doit être de 8 bits vers 8 bits. La fonction XT8, de 16 bits vers 8 bits, permet de calculer P(x XOR y), x et y étant deux octets, de la façon suivante: P(x XOR y)=XT8(P(x),P(y)). Il est donc possible, étant donné deux données représentées sous forme permutée P(x) et P(y), de calculer la donnée permutée P(x XOR y) correspondant à x XOR y, et cela sans manipuler directement la donnée x XOR y.

La fonction XT8 est telle que définie ci-dessus. Elle peut être calculée de diverses manières, à conditions d'aboutir au résultat défini ci-dessus.

En particulier, lorsque XT8 est calculée à l'aide des sous fonctions XT1 et XT2, les fonctions XT1 et XT2 sont de préférence stockées sous forme de tables. Ces deux tables occupent un emplacement mémoire de 256 octets. XT8 n'a pas besoin d'être stockée sous forme de table puisqu'elle peut être calculée de façon assez rapide grâce aux tables XT1 et XT2 qui prennent assez peu de mémoire. Mais il serait fonctionnellement équivalent (potentiellement plus rapide d'exécution mais plus consommateur de mémoire) de stocker une table pour XT8 au lieu des tables pour XT1 et XT2.

Selon un mode de réalisation préféré, utile en particulier pour le chiffrement, l'algorithme cryptographique étant l'algorithme AES, l'opération "MixColumns" est modifiée de manière à remplacer le calcul de:

$$s'_{0,c} \leftarrow (02 \text{ . } s_{0,c}) \text{ XOR } (03 \text{ . } s_{1,c}) \text{ XOR } s_{2,c} \text{ XOR } s_{3,c}$$

$$s'_{1,c} \leftarrow s_{0,c} \text{ XOR } (02 \text{ . } s_{1,c}) \text{ XOR } (03 \text{ . } s_{2,c}) \text{ XOR } s_{3,c}$$

$$s'_{2,c} \leftarrow s_{0,c} \text{ XOR } s_{1,c} \text{ XOR } (02. \, s_{2,c}) \text{ XOR } (03 \, . \, s_{3,c})$$

$$s'_{3,c} \leftarrow (03 \, . \, s_{0,c}) \text{ XOR } s_{1,c} \text{ XOR } s_{2,c} \text{ XOR } (02 \, . \, s_{3,c})$$

où 02 et 03 représentent les octets ayant pour valeur 02 et 03, par le calcul de:

$$s'''_{0,c} = E5XT8(D2(s''_{0,c}), D2(s''_{1,c}), s''_{1,c}, s''_{2,c}, s''_{3,c})$$

$$s''_{1,c} = E5XT8(s''_{0,c}, D2(s''_{1,c}), D2(s''_{2,c}), s''_{2,c}, s''_{3,c})$$

$$s''_{2,c} = E5XT8(s''_{0,c}, s''_{1,c}, D2(s''_{2,c}), D2(s''_{3,c}), s''_{3,c})$$

$$s''_{3,c} = E5XT8(D2(s''_{0,c}), s''_{0,c}, s''_{1,c}, s''_{2,c}, D2(s''_{3,c}))$$

avec $s''_{i,c} = P(s_{i,c})$ pour tout i entre 0 et 3, la permutation P étant une permutation de 8 bits vers 8 bits. Il importe, par analogie avec ce qui a été précédemment indiqué, que dans la méthode sécurisée n'apparaissent jamais les valeurs $s_{i,c}$ mais seulement les valeurs permutées $s''_{i,c}$. La fonction E5XT8 est définie pour tout quintuplet d'octets a,b,c,d,e par:

$$E5XT8(a,b,c,d,e) = XT8(a, XT8(b, XT8(c, XT8(d,e))))$$

Les fonctions XT8 et D2 sont les mêmes que ci-dessus (il est rappelé que de préférence XT1 et XT2 sont stockée sous forme de table, et XT8 est de préférence calculée à la volée). D2 peut être calculée à la volée grâce aux fonctions ML et MH (il n'est généralement pas nécessaire de stocker une table pour D2, bien que cela soit possible et a priori un peu plus rapide d'exécution, car cela prend plus de mémoire que de stocker des tables pour ML et MH). Les fonctions ML et MH sont donc de préférence stockées sous forme de tables (ces tables occupent 16 octets chacune), et sont définies pour tout quartet x, 0 représentant le quartet nul, 02 représentant l'octet de valeur 02, et le point . représentant la multiplication dans le corps fini GF(2^8), par:

$$ML(x) = P(02 \, . \, (0 \mid p1^{-1}(x)))$$

$$MH(x) = P(02 \, . \, (p2^{-1}(x) \mid 0))$$

Selon un mode de réalisation préféré, utile en particulier pour le déchiffrement, l'algorithme cryptographique étant l'algorithme AES, l'opération "InvMixColumns" est modifiée de manière à remplacer le calcul de:

$$s'_{0,c} \leftarrow (0e \, . \, s_{0,c}) \text{ XOR } (0b \, . \, s_{1,c}) \text{ XOR } (0d \, . \, s_{2,c}) \text{ XOR } (09 \, . \, s_{3,c})$$

$$s'_{1,c} \leftarrow (09 \, . \, s_{0,c}) \text{ XOR } (0e \, . \, s_{1,c}) \text{ XOR } (0b \, . \, s_{2,c}) \text{ XOR } (0d \, . \, s_{3,c})$$

$$s'_{2,c} \leftarrow (0d \cdot s_{0,c}) \text{ XOR } (09 \cdot s_{1,c}) \text{ XOR } (0e \cdot s_{2,c}) \text{ XOR } (0b \cdot s_{3,c})$$

$$s'_{3,c} \leftarrow (0b \cdot s_{0,c}) \text{ XOR } (0d \cdot s_{1,c}) \text{ XOR } (09 \cdot s_{2,c}) \text{ XOR } (0e \cdot s_{3,c})$$

où 09, 0b, 0c, 0d et 0e représentent les octets ayant pour valeur hexadécimale 09, 0b, 0c, 0d et 0e, par le calcul de:

$$s'''_{0,c} \leftarrow E4XT8( De(s''_{0,c}), Db(s''_{1,c}), Dd(s''_{2,c}), D9(s''_{3,c}))$$

$$s'''_{1,c} \leftarrow E4XT8( D9(s''_{0,c}), De(s''_{1,c}), Db(s''_{2,c}), Dd(s''_{3,c}))$$

$$s'''_{2,c} \leftarrow E4XT8( Dd(s''_{0,c}), D9(s''_{1,c}), De(s''_{2,c}), Db(s''_{3,c}))$$

$s'''_{3,c} \leftarrow E4XT8( Db(s''_{0,c}), Dd(s''_{1,c}), D9(s''_{2,c}), De(s''_{3,c}))$ avec $s''_{i,c} = P(s_{i,c})$ pour tout $i$ entre 0 et 3, la permutation P étant une permutation de 8 bits vers 8 bits, la fonction E4XT8 étant définie tout quadruplet d'octets $a, b, c, d$ par:

$$E4XT8(a,b,c,d) = XT8(a, XT8(b, XT8(c,d)))$$

les fonctions XT8 et D2 étant les mêmes que ci-dessus (XT1 et XT2 étant de préférence stockées sous forme de tables comme vu précédemment), les fonctions D9, Db, Dd et De étant calculables pour tout octet $x = xh \mid xl$ où $xh$ et $xl$ sont les quartets de poids fort et faible de $x$, par exemple en utilisant les formules:

$$D9(x) = XT8(TH(xh), TL(xl))$$

$$Db(x) = XT8(D9(x), D2(x))$$

$$Dd(x) = XT8(Dc(x), x)$$

$$De(x) = XT8(Dc(x), D2(x))$$

la fonction Dc étant calculable par:

$$Dc(x) = XT8(RH(xh), RL(xl))$$

les fonctions D9, Db, Dc, Dd et De, qui pourraient être stockées sous forme de tables, étant de préférence calculées à la volée (afin d'éviter de consommer de la mémoire avec les tables) à partir des fonctions TL, TH, RL et RH, les fonctions TL, TH, RL et RH étant de préférence stockées sous forme de tables (occupant chacune 16 octets soit un total de 64 octets), les fonctions TL, TH, RL et RH étant définies pour tout quartet $x$, 0 représentant le quartet nul, 09 et 0c représentant les octets de valeur hexadécimale 09 et 0c, et le point . représentant la multiplication dans le corps fini GF(2^8) par:

$$TL(x)=P(09 \cdot (0 \mid p1^{-1}(x)))$$

$$TH(x)=P(09 \cdot (p2^{-1}(x) \mid 0))$$

$$RL(x)=P(0c \cdot (0 \mid p1^{-1}(x)))$$

$$RH(x)=P(0c \cdot (p2^{-1}(x) \mid 0))$$

De nombreuses possibilités existent donc pour calculer le quadruplet ($s'''_{0,c}$, $s'''_{1,c}$, $s'''_{2,c}$, $s'''_{3,c}$), les choix devant être guidés essentiellement par des considérations tenant à l'optimisation de l'occupation de la mémoire (en particulier pour les dispositifs disposant de très peu de mémoire), ainsi qu'à la rapidité d'exécution de l'algorithme une fois qu'il est protégé (en particulier pour les dispositifs très lents, ou pour les applications requérant du chiffrement/déchiffrement rapide). Les deux contraintes sont parfois contradictoires et peuvent requérir un arbitrage. Pré-calculer une table prend un peu de temps, et occupe de la mémoire, mais par la suite chaque fois que la fonction est invoquée, le résultat est généralement obtenu très rapidement grâce à la table. Les choix affectant la façon dont est calculé le quadruplet sont guidés, dans une moindre, par des décisions arbitraires du développeur, qui disposent parfois de nombreuses alternatives sensiblement équivalentes. Ainsi, la fonction E4XT8 est introduite par commodité d'écriture, afin de donner des définitions plus élégantes et plus concises, mais il n'est pas nécessaire qu'elle apparaisse en tant que telle (elle peut être à chaque fois développée ce qui conduit à une implémentation ne faisant apparaître que les sous-fonctions d'E4XT8, mais à un code exécutable prenant plus de mémoire, dans le cas où la méthode est implémentée sous forme logicielle et non matérielle). De même les fonctions D9, Db, Dc, Dd et De, peuvent être développées, ce qui conduirait à ne voir apparaître que la fonction XT8 et ses sous fonctions, ainsi que les tables TL, TH, RL, RH. La fonction XT8 peut elle-même être développée. Il est également possible de regrouper certaines parties de la formule dévelopée dans des fonctions différentes des fonctions D9, Db, etc. Par exemple, à titre d'alternative aux différentes possibilités discutées ci-dessus (selon que certaines fonctions sont calculées à la volée, ou pré-calculées sous forme de tables, développée ou rassemblées, etc.), : on n'utilise pas de tables TH, TL, RH, ni RL, et l'on redéfinit les fonctions D9 et Dc tout en définissant de nouvelles fonctions D4 et D8, pour tout octet x, de la manière suivante :

$$D4(x)=D2(D2(x))$$

$$D8(x)=D2(D4(x))$$

$$D9(x)=XT8(D8(x),x)$$

$$Dc(x)=XT8(D8(x),D4(x))$$

Ce mode de réalisation alternatif est avantageux car il permet d'éviter l'utilisation des tables TL,TH, RL et RH précédemment définies, qui consomment de la mémoire, grâce à l'exécution des fonctions ci-dessus à la volée (on aurait également pu calculer TL,TH, RL et RH à la volée).

A titre d'autre exemple de mise en oeuvre des calculs, dans les fonctions définies par référence à une fonction XT2, il n'est pas nécessaire d'exécuter effectivement XT2 telle qu'elle est définie. La fonction XT2 peut être remplacée par une fonction XT2bis définie pour tout couple de quartets (x,y) par XT2bis(x,y)=p21(XT1(p12(x),p12(y))), p12 et p21 étant deux permutations définies pour tout quartet x par p12(x)=p1(p2$^{-1}$(x)) et p21(x)=p2(p1$^{-1}$(x)). Cette variante est avantageuse car elle permet de ne stocker en mémoire et sous forme de tables que XT1, p12 et p21, le stockage de la table XT2 n'étant plus nécessaire puisqu'on peut calculer XT2bis à la volée. On économise ainsi 128 octets précédemment utilisés pour la table XT2, et on n'a besoin que de 16 octets supplémentaires pour les tables p12 et p21 (8 octets chacune). L'exécution est a priori légèrement ralentie.

L'invention se rapporte également à un dispositif électronique mettant en oeuvre une méthode ci-dessous. Le dispositif électronique peut mettre en oeuvre de la logique câblée, et/ou disposer d'un processeur. Le dispositif électronique peut ainsi être un ordinateur (qu'il s'agisse d'un serveur, d'une station de travail, d'un ordinateur portable, d'un téléphone mobile, d'un assistant personnel dit PDA, etc.), mais aussi un dispositif sécurisé tel qu'une carte à puce, un HSM (hardware security module, servant typiquement de moteur cryptographique pour des systèmes requérant des performances importantes, par exemples de gros serveurs), un dongle, une clé USB sécurisée, ou toutes sortes de tokens, etc. De tels dispositifs sécurisés sont censés résister aux attaques, et sont généralement utilisés dans des contextes extrêmement sensibles par exemple pour des transactions financières, pour échanger des informations personnelles telles que des dossiers médicaux, ou des informations intéressant la défense nationale, etc. Ils contiennent généralement des contremesures physiques: par exemple, des détecteurs peuvent être incorporés, détecter qu'une agression a eu lieu, et en réponse s'autodétruire, envoyer un message à un système de supervision, etc. Des composants électroniques normalement noyés dans le dispositif peuvent ainsi détecter qu'ils sont exposés à la lumière du jour ou à un rayonnement imprévu, qu'ils subissent des vibrations anormales, que des scellés ont été brisés, que la température est trop haute ou trop faible, etc. Mettre en oeuvre les méthodes selon l'invention dans de tels dispositifs constitue un rempart supplémentaire contre les attaques telles que la DPA, qui ne visent pas spécifiquement l'algorithme cryptographique lui-même, souvent réputé sûr d'un point de vue mathématique, mais visent plutôt les faiblesses induites par la mise en oeuvre concrète de cet algorithme par un dispositif donné. En effet un tel dispositif présente des caractéristiques physiques (consommation d'énergie, rayonnement électromagnétiques, etc.) susceptibles de trahir son fonctionnement interne lors de la mise en oeuvre de l'algorithme cryptographique et ainsi d'échapper à au moins une hypothèse de départ de l'algorithme cryptographique qui présuppose en général qu'au moins certaines informations restent secrètes. L'invention répond donc à un véritable problème technique et ne constitue pas une simple abstraction non brevetable.

**Revendications**

1. Méthode de sécurisation d'un algorithme cryptographique, l'algorithme transformant un message d'entrée en message de sortie, la méthode modifiant l'implémentation de l'algorithme sans que cela ne change le message de sortie, la méthode étant **caractérisée en ce qu'**elle comprend l'ajout d'une permutation P sur le message d'entrée, la permutation inverse P$^{-1}$ étant appliquée à l'issue de l'exécution de l'algorithme afin d'obtenir le message de sortie, les opérations internes de l'algorithme étant modifiées de manière à manipuler les données intermédiaires sous forme permutée.

2. Méthode selon la revendication 1, une donnée intermédiaire x = xh | xl manipulée par l'algorithme lorsqu'il n'est pas sécurisé par ladite méthode étant remplacée, selon ladite méthode, par une forme permutée P(x) = p2(xh) | p1(xl), où xh sont les h bits de poids fort de x et xl sont les l bits de poids faible de x, p1 et p2 étant deux permutations indépendantes, respectivement de l bits vers l bits et de h bits vers h bits.

3. Méthode selon la revendication 2, la génération des permutations p1 et p2 comprenant les étapes suivantes:

    a. Détermination d'une permutation fixe s1(0) de h bits vers h bits et d'une permutation fixe s2(0) de l bits vers l bits;
    b. Calcul d'une suite de permutations suivant la relation de récurrence s1(i+1)(x)=s1(0)(s1(i)(x) xor k1i) où chaque valeur k1i est générée aléatoirement parmi les nombres de h bits;
    c. Définition de la permutation p1 comme égale à s1(n1), pour un certain entier n1;
    d. Calcul d'une suite de permutation suivant la relation de récurrence s2(i+1)(x)=s2(0)(s2(i)(x) xor k2i) où chaque valeur k2i est générée aléatoirement parmi les nombres de l bits;
    e. Définition de la permutation p2 comme égale à s2(n2), pour un certain entier n2.

4. Méthode selon l'une des revendications précédentes, la permutation P étant une permutation sur 8 bits, l'algorithme cryptographique étant l'algorithme AES, l'opération "SubBytes" de l'algorithme AES étant modifiée de manière à remplacer le calcul de $s_{i,j}$ <- S($s_{i,j}$) par le calcul de s'$_{ij}$ <- S'(s'$_{ij}$), S' étant une permutation définie par S'(x)=P(S(P$^{-1}$(x))) pour tout octet x, et s'$_{ij}$=P($s_{ij}$) représentant les données permutées de l'état $s_{ij}$ à l'aide de la permutation P.

5. Méthode selon la revendications 4 lorsqu'elle dépend de la revendication 2, les permutations p1 et p2 étant des permutations sur 4 bits, la méthode utilisant une seconde permutation P' sur 8 bits, le calcul de $s'_{ij}$ <- $S'(s'_{ij})$ étant mis en oeuvre en calculant $s'_{ij}$ <- TableLookUp($s'_{ij}$), la fonction TableLookUp étant définie pour tout octet x par TableLookUp(x)=v|u, avec:

$$u = T(x) \text{ XOR } p2(S2(P^{-1}(P'^{-1}(x))))$$

$$v = T(P'(x)) \text{ XOR } p1(S1(P^{-1}(P'(x))))$$

les fonctions S1 et S2 étant définies pour tout octet x par:

$$S1(x) = \text{quartet de poids faible de } S(x)$$

$$S2(x) = \text{quartet de poids fort de } S(x)$$

la fonction T étant définie pour tout octet x par:

$$T(x)=p1(S1(P^{-1}(x))) \text{ XOR } p2(S2(P^{-1}(P'^{-1}(x))))$$

6. Méthode selon l'une des revendications précédentes, la permutation P étant une permutation sur 8 bits, l'algorithme cryptographique étant l'algorithme AES, l'opération "InvSubBytes" de l'algorithme AES étant modifiée de manière à remplacer le calcul de $s_{i,j}$ <- $S^{-1}(s_{i,j})$ par le calcul de $s'_{ij}$ <- $S^{-1}(s'_{ij})$, $S'^{-1}$ étant une permutation définie par $S'^{-1}(x) =P(S^{-1}(P^{-1}(x)))$ pour tout x, et $s'_{ij}=P(s_{ij})$ représentant les données permutées de l'état $s_{ij}$ à l'aide de la permutation P.

7. Méthode selon la revendication 6 lorsqu'elle dépend de la revendication 2, les permutations p1 et p2 étant des permutations sur 4 bits, la méthode comprenant une seconde permutation P' sur 8 bits, le calcul de $s_{i,j}$ <- $S^{-1}(s_{i,j})$ étant mis en oeuvre en calculant $s'_{ij}$ <- TableLookUpInv($s'_{ij}$), la fonction TableLookUpInv étant définie pour tout octet x par TableLookUpInv(x)=v|u, avec:

$$u = T(x) \text{ XOR } p2(S2(P^{-1}(P'^{-1}(x))))$$

$$v = T(P'(x)) \text{ XOR } p1(S1(P^{-1}(P'(x))))$$

les fonctions S1 et S2 étant définies pour tout octet x par:

$$S1(x) = \text{quartet de poids faible de } S^{-1}(x)$$

$$S2(x) = \text{quartet de poids fort de } S^{-1}(x)$$

la fonction T étant définie pour tout octet x par:

$$T(x)=p1(S1(P^{-1}(x)))\ XOR\ p2(S2(P^{-1}(P'^{-1}(x))))$$

**8.** Méthode selon l'une des revendications précédentes, l'algorithme cryptographique étant l'algorithme AES, modifié de sorte à remplacer le calcul de l'opération "SubWord" sur un quadruplet d'octets (x1,x2,x3,x4), définie par Subword (x1,x2,x3,x4) = (S(x1),S(x2),S(x3),S(x4)), par le calcul d'une opération SubWord' sur le quadruplet d'octets (x'1,x'2,x'3,x'4), avec x'i=P(xi) pour chaque variable xi, l'opération SubWord' étant définie par SubWord'( (x'1,x'2,x'3,x'4))=(S'(x'1),S'(x'2),S'(x'3),S'(x'4)), S' étant une permutation définie par S'(x)=P(S(P$^{-1}$(x))) pour tout octet x, la permutation P étant une permutation sur 8 bits.

**9.** Méthode selon la revendication 8, l'étape « KeyExpansion » de l'AES étant modifiée de manière à remplacer, durant chaque itération k, k étant compris entre 1 et 10, et l'octet Rcon(k) étant égal à $2^{k-1}$, le calcul de:

$$temp = SubWord(RotWord(temp))\ XOR\ Rcon(k)$$

par le calcul de:

$$temp' = XT8(SubWord'(RotWord\ (temp')),Rcon'(k))$$

avec Rcon'(0)=P(Rcon(0)) et Rcon'(k)=D2(Rcon(k-1)) pour un entier k compris entre 2 et 10, la fonction XT8 de 16 bits vers 8 bits pouvant être calculée, pour tout couple d'octets (x,y) se décomposant en x=xh | xl et y=yh | yl, xh et xl étant les quartets de poids fort et de poids faible de x, yh et yl étant les quartets de poids fort et de poids faible de y, par la formule:

$$XT8(x,y)=XT2(xh,yh)\ |\ XT1(xl,yl)$$

les fonctions XT1 et XT2, de 8 bits vers 4 bits, pouvant être calculées, pour tout couple de quartets (x,y), par les formules:

$$XT1(x,y)=p1(p1^{-1}(x)\ XOR\ p1^{-1}(y))$$

$$XT2(x,y)=p2(p2^{-1}(x)\ XOR\ p2^{-1}(y))$$

la fonction D2 pouvant être calculée, pour tout octet x=xh|xl, xh étant le quartet de poids fort de x et xl étant le quartet de poids faible, par la formule:

$$D2(xh\ |\ xl)= XT8(ML(xl),MH(xh))$$

les fonctions ML et MH pouvant être calculées, pour tout quartet x, par les formules:

$$ML(x)=P(02\ .\ (0\ |\ p1^{-1}(x)))$$

$$MH(x)=P(02 \cdot (p2^{-1}(x) \mid 0))$$

10. Méthode selon l'une des revendications précédentes, la permutation P étant une permutation sur 8 bits, l'algorithme cryptographique étant l'algorithme AES, l'opération "AddRoundKey" de l'AES étant modifiée de manière à remplacer le calcul de $s_{i,j} \leftarrow s_{i,j}$ XOR $k_{i,j}$ par le calcul de $s'_{ij} \leftarrow XT8(s'_{ij},k'_{ij})$, les valeurs $s'_{ij}=P(s_{ij})$ et $k'_{ij}=P(k_{ij})$ représentant les données permutées de l'état $s_{ij}$, et de la sous-clef $k_{ij}$, à l'aide de la permutation P, la fonction XT8 de 16 bits vers 8 bits pouvant être calculée pour tout couple d'octets (x,y) se décomposant en x=xh | xl et y=yh | yl, xh et xl étant les quartets de poids fort et de poids faible de x, yh et yl étant les quartets de poids fort et de poids faible de y, par la formule:

$$XT8(x,y)=XT2(xh,yh) \mid XT1(xl,yl)$$

les fonctions XT1 et XT2, de 8 bits vers 4 bits, pouvant être calculées, pour tout couple de quartets (x,y), par les formules:

$$XT1(x,y)=p1(p1^{-1}(x) \text{ XOR } p1^{-1}(y))$$

$$XT2(x,y)=p2(p2^{-1}(x) \text{ XOR } p2^{-1}(y))$$

11. Méthode selon l'une des revendications précédentes, la permutation P étant une permutation sur 8 bits, l'algorithme cryptographique étant l'algorithme AES, l'opération "MixColumns" étant modifiée de manière à remplacer le calcul de:

$$s'_{0,c} \leftarrow (02 \cdot s_{0,c}) \text{ XOR } (03 \cdot s_{1,c}) \text{ XOR } s_{2,c} \text{ XOR } s_{3,c}$$

$$s'_{1,c} \leftarrow s_{0,c} \text{ XOR } (02 \cdot s_{1,c}) \text{ XOR } (03 \cdot s_{2,c}) \text{ XOR } s_{3,c}$$

$$s'_{2,c} \leftarrow s_{0,c} \text{ XOR } s_{1,c} \text{ XOR } (02 \cdot s_{2,c}) \text{ XOR } (03 \cdot s_{3,c})$$

$$s'_{3,c} \leftarrow (03 \cdot s_{0,c}) \text{ XOR } s_{1,c} \text{ XOR } s_{2,c} \text{ XOR } (02 \cdot s_{3,c})$$

par le calcul de:

$$s'''_{0,c} \leftarrow E5XT8(D2(s''_{0,c}), D2(s''_{1,c}), s''_{1,c}, s''_{2,c}, s''_{3,c})$$

$$s'''_{1,c} \leftarrow E5XT8(s''_{0,c}, D2(s''_{1,c}), D2(s''_{2,c}), s''_{2,c}, s''_{3,c})$$

$$s'''_{2,c} \leftarrow E5XT8(s''_{0,c}, s''_{1,c}, D2(s''_{2,c}), D2(s''_{3,c}), s''_{3,c})$$

$$s'''_{3,c} \leftarrow \text{E5XT8}(D2(s''_{0,c}), s''_{0,c}, s''_{1,c}, s''_{2,c}, D2(s''_{3,c}))$$

avec $s''_{i,c}=P(s_{i,c})$ pour tout i entre 0 et 3, la fonction E5XT8 pouvant être calculée de la manière suivante pour tout quintuplet d'octets (a,b,c,d,e):

$$\text{E5XT8}(a,b,c,d,e)=\text{XT8}(a,\text{XT8}(b,\text{XT8}(c,\text{XT8}(d, e))))$$

la fonction XT8 de 16 bits vers 8 bits pouvant être calculée, pour tout couple d'octets (x,y) se décomposant en x=xh | xl et y=yh | yl, xh et xl étant les quartets de poids fort et de poids faible de x, yh et yl étant les quartets de poids fort et de poids faible de y, par la formule:

$$\text{XT8}(x,y)=\text{XT2}(xh,yh) \mid \text{XT1}(xl,yl)$$

les fonctions XT1 et XT2, de 8 bits vers 4 bits, pouvant être calculées pour tout couple de quartets (x,y), par les formules:

$$\text{XT1}(x,y)=p1(p1^{-1}(x) \text{ XOR } p1^{-1}(y))$$

$$\text{XT2}(x,y)=p2(p2^{-1}(x) \text{ XOR } p2^{-1}(y))$$

la fonction D2 pouvant être calculée pour tout octet x=xh|xl, xh étant le quartet de poids fort de x et xl étant le quartet de poids faible, par la formule:

$$D2(xh \mid xl)= \text{XT8}(ML(xl),MH(xh))$$

les fonctions ML et MH pouvant être calculées, pour tout quartet x, par les formules:

$$ML(x)=P(02 . (0 \mid p1^{-1}(x)))$$

$$MH(x)=P(02 . (p2^{-1}(x) \mid 0))$$

**12.** Méthode selon l'une des revendications précédentes, la permutation P étant une permutation sur 8 bits, l'algorithme cryptographique étant l'algorithme AES, l'opération "InvMixColumns" étant modifiée de manière à remplacer le calcul de:

$$s'_{0,c} \leftarrow (0e . s_{0,c}) \text{ XOR } (0b . s_{1,c}) \text{ XOR } (0d . s_{2,c}) \text{ XOR } (09 . s_{3,c})$$

$$s'_{1,c} \leftarrow (09 . s_{0,c}) \text{ XOR } (0e . s_{1,c}) \text{ XOR } (0b . s_{2,c}) \text{ XOR } (0d . s_{3,c})$$

$$s'_{2,c} \leftarrow (0d . s_{0,c})\ XOR\ (09 . s_{1,c})\ XOR\ (0e . s_{2,c})\ XOR\ (0b . s_{3,c})$$

$$s'_{3,c} \leftarrow (0b . s_{0,c})\ XOR\ (0d . s_{1,c})\ XOR\ (09 . s_{2,c})\ XOR\ (0e . s_{3,c})$$

par le calcul de:

$$s'''_{0,c} = E4XT8(De(s''_{0,c}),\ Db(s''_{1,c}),\ Dd(s''_{2,c}),\ D9(s''_{3,c}))$$

$$s'''_{1,c} = E4XT8(D9(s''_{0,c}),\ De(s''_{1,c}),\ Db(s''_{2,c}),\ Dd(s''_{3,c}))$$

$$s'''_{2,c} = E4XT8(Dd(s''_{0,c}),\ D9(s''_{1,c}),\ De(s''_{2,c}),\ Db(s''_{3,c}))$$

$$s'''_{3,c} = E4XT8(Db(s''_{0,c}),\ Dd(s''_{1,c}),\ D9(s''_{2,c}),\ De(s''_{3,c}))$$

avec $s''_{i,c}=P(s_{i,c})$ pour tout i entre 0 et 3, la fonction E4XT8 pouvant être calculée, pour tout quadruplet d'octets (a, b,c,d), par la formule:

$$E4XT8(a,b,c,d,)=XT8(a,XT8(b,XT8(c,d)))$$

la fonction XT8 de 16 bits vers 8 bits pouvant être calculée, pour tout couple d'octets (x,y) se décomposant en x=xh | xl et y=yh | yl, xh et xl étant les quartets de poids fort et de poids faible de x, yh et yl étant les quartets de poids fort et de poids faible de y, par la formule:

$$XT8(x,y)=XT2(xh,yh)\ |\ XT1(xl,yl)$$

les fonctions XT1 et XT2, de 8 bits vers 4 bits, pouvant être calculées, pour tout couple de quartets (x,y), par les formules:

$$XT1(x,y)=p1(p1^{-1}(x)\ XOR\ p1^{-1}(y))$$

$$XT2(x,y)=p2(p2^{-1}(x)\ XOR\ p2^{-1}(y))$$

les fonctions D9, Db, Dd et De pouvant être calculées, pour tout octet x = xh | xl où xh et xl sont les quartets de poids fort et faible de x, par les formules:

$$D9(x)=XT8(TH(xh),TL(xl))$$

$$Db(x)=XT8(D9(x),D2(x))$$

$$Dd(x)=XT8(Dc(x),x)$$

$$De(x)=XT8(Dc(x),D2(x))$$

la fonction Dc pouvant être calculée, pour tout octet x = xh | xl où xh et xl sont les quartets de poids fort et faible de x, par les formules:

$$Dc(x)=XT8(RH(xh),RL(xl))$$

Les fonctions TL, TH, RL et RH pouvant être calculées, pour tout quartet x, par les formules:

$$TL(x)=P(09 \cdot (0 \mid p1^{-1}(x)))$$

$$TH(x)=P(09 \cdot (p2^{-1}(x) \mid 0))$$

$$RL(x)=P(0c \cdot (0 \mid p1^{-1}(x)))$$

$$RH(x)=P(0c \cdot (p2^{-1}(x) \mid 0))$$

la fonction D2 pouvant être calculée, pour tout octet x=xh|xl, xh étant le quartet de poids fort de x et xl étant le quartet de poids faible, par la formule:

$$D2(xh \mid xl)= XT8(ML(xl),MH(xh))$$

les fonctions ML et MH pouvant être calculées, pour tout quartet x, par les formules:

$$ML(x)=P(02 \cdot (0 \mid p1^{-1}(x)))$$

$$MH(x)=P(02 \cdot (p2^{-1}(x) \mid 0))$$

**13.** Dispositif électronique mettant en oeuvre une méthode selon l'une des revendications précédentes.

Figure 1

Figure 2

Figure 3

Figure 4

```
Cipher(byte in[16], byte out[16], word w[44])
begin
    byte state[16]
    state=in
    AddRoundKey(state,w[0,3])
    for round=1 to 9
        SubBytes(state)
        ShiftRows(state)
        MixColumns(state)
        AddRoundKey(state,w[round*4,(round+1)*4-1])
    end for
    SubBytes(state)
    ShiftRows(state)
    AddRoundKey(state,w[40,43])
end
```

Figure 5

```
InvCipher(byte in[16], byte out[16], word w[44])
begin
    byte state[16]
    state=in
    AddRoundKey(state,w[40,43])
    for round=9 downto 1
        InvShiftRows(state)
        InvSubBytes(state)
        AddRoundKey(state,w[round*4,(round+1)*4-1])
        InvMixColumns(state)
    end for
    InvShiftRows(state)
    InvSubBytes(state)
    AddRoundKey(state,w[0,3])
end
```

Figure 6

Europäisches
Patentamt

European
Patent Office

Office européen
des brevets

# RAPPORT DE RECHERCHE EUROPEENNE

Numéro de la demande

EP 08 30 5521

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MENEZES, VANSTONE, OORSCHOT: "Handbook of Applied cryptography" 1997, CRC PRESS LLC , USA , XP001525007 | 1,13 | INV. H04L9/06 |
| A | * page 252 - page 256 * * page 276 - page 277 * ----- | 2-12 | |
| A | WO 2005/060147 A (KONINKL PHILIPS ELECTRONICS NV [NL]; GORISSEN PAULUS M H M A [NL]; TRE) 30 juin 2005 (2005-06-30) * abrégé * * page 3 - page 6 * ----- | 1-13 | |
| A | GB 2 345 229 A (MOTOROLA LTD [GB]) 28 juin 2000 (2000-06-28) * abrégé * * page 4 - page 8 * ----- | 1-13 | |

DOMAINES TECHNIQUES RECHERCHES (IPC)

H04L

Le présent rapport a été établi pour toutes les revendications

| Lieu de la recherche | Date d'achèvement de la recherche | Examinateur |
|---|---|---|
| Berlin | 17 juillet 2009 | San Millán Maeso, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 30 5521

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-07-2009

| Document brevet cité au rapport de recherche | | Date de publication | Membre(s) de la famille de brevet(s) | | Date de publication |
|---|---|---|---|---|---|
| WO 2005060147 | A | 30-06-2005 | BR | PI0417450 A | 10-04-2007 |
| | | | CN | 1890914 A | 03-01-2007 |
| | | | JP | 2007514193 T | 31-05-2007 |
| | | | KR | 20060123298 A | 01-12-2006 |
| | | | MX | PA06006464 A | 23-08-2006 |
| | | | US | 2008285744 A1 | 20-11-2008 |
| GB 2345229 | A | 28-06-2000 | AUCUN | | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1125394 A
- WO 0027068 A

- WO 20030044003 A

**Littérature non-brevet citée dans la description**

- **J. Daemen ; V. Rijmen.** *The Design of Rijndael: AES -The Advanced Encryption Standard,* 2002

- **J.R. Rao ; P. Rohatgi ; H. Scherzer ; S. Tinguely.** Partitioning attacks: Or How to rapidly Clone Some GSM Cards. *Proceedings of the 2002 IEEE Symposium on Security and Privacy,* 2002